# EUROPEAN PATENT APPLICATION

(11) **EP 3 153 352 A1**
(43) Date of publication of application: **12.04.2017**
(21) Application number: 15802627.8
(22) Date of filing: 12.05.2015
(51) Int. Cl.: B60R 1/00, B60R 1/12, G02F 1/13, G02F 1/1335, G02F 1/13363, G09F 9/00

(54) **ELECTRONIC MIRROR DEVICE**

(30) Priority: 03.06.2014 JP 2014114570
(71) Applicant: Panasonic Intellectual Property Management Co., Ltd., Osaka-shi, Osaka 540-6207 (JP)
(72) Inventor: OISHI, Toshiharu, Osaka-shi, Osaka 540-6207 (JP)
(74) Representative: Schwabe - Sandmair - Marx
(86) International application number: PCT/JP2015/002394
(87) International publication number: WO 2015/186297

(57) **Abstract**

An electronic mirror device for displaying an image captured by a camera mounted to a vehicle includes a liquid crystal display having a display surface, a retarder, and a cholesteric liquid crystal layer. The retarder is disposed opposite the display surface of the liquid crystal display, and circularly polarizes a liquid crystal image emitted from the liquid crystal display. The cholesteric liquid crystal layer is disposed on the opposite side of the retarder from the liquid crystal display. The liquid crystal image circularly polarized by the retarder passes through the cholesteric liquid crystal layer.

## Description

### TECHNICAL FIELD

The present disclosure relates to an electronic mirror device which presents the driver with images captured by a camera mounted to an automobile.

### BACKGROUND ART

Some well-known conventional electronic mirror devices include an image display unit and a semi-reflective mirror that is provided on the front surface of the image display unit. Such electronic mirror devices are useful, for example, in a situation as follows. If rearward visibility is obstructed by a rear seat display or other obstacles, the driver cannot monitor the rear view very well through the semi-reflective mirror. In such a case, an image captured by the camera mounted to the vehicle is displayed on the image display unit, so that the driver can see the image on the image display unit through the semi-reflective mirror so as to monitor the rear view (see, for example, Patent Literature 1).

### Citation List

### Patent Literature

PTL 1: Japanese Patent Unexamined Publication No. H11-291817

### SUMMARY OF THE INVENTION

The present disclosure provides an electronic mirror device which prevents a decrease in the visibility of the image display unit caused by the semi-reflective mirror.

The electronic mirror device as an aspect of the present disclosure displays an image captured by a camera mounted to a vehicle. The electronic mirror device includes a liquid crystal display having a display surface, a retarder, and a cholesteric liquid crystal layer. The retarder is disposed opposite the display surface of the liquid crystal display, and circularly polarizes a liquid crystal image emitted from the liquid crystal display. The cholesteric liquid crystal layer is disposed on an opposite side of the retarder from the liquid crystal display. The liquid crystal image circularly polarized by the retarder passes through the cholesteric liquid crystal layer.

According to this configuration, the cholesteric liquid crystal does not reflect but transmits the liquid crystal image circularly polarized by the retarder. This prevents a decrease in the visibility of the liquid crystal display caused by a decrease in the luminance of the image. In addition, since no reflection of the image appears on the cholesteric liquid crystal layer, there is no decrease in visibility due to image overlapping. On the other hand, the cholesteric liquid crystal layer reflects the circularly polarized light coming from the direction opposite the passing circularly polarized light. Accordingly, the cholesteric liquid crystal layer functions as a mirror for outside light. Thus, the electronic mirror device can prevent a decrease in the visibility of the image display unit, which is caused by the conventional semi-reflective mirror.

### BRIEF DESCRIPTION OF DRAWINGS

FIG. 1 is a front view of an automobile interior of an automobile mounted with an electronic mirror device according to an exemplary embodiment of the present disclosure.
FIG. 2 is a plan view of the automobile shown in FIG. 1.
FIG. 3 is a schematic perspective side view of the inside of the automobile shown in FIG. 2.
FIG. 4 is a front view of a display device included in the electronic mirror device according to the exemplary embodiment of the present disclosure.
FIG. 5 is a sectional view of the display device shown in FIG. 4.
FIG. 6 is a diagram showing a liquid crystal image in the electronic mirror device according to the exemplary embodiment of the present disclosure.
FIG. 7 is a diagram showing outside light with respect to the electronic mirror device according to the exemplary embodiment of the present disclosure.
FIG. 8 is a control block diagram of the electronic mirror device according to the exemplary embodiment of the present disclosure.
FIG. 9A shows a modified example of the display unit included in the electronic mirror device according to the exemplary embodiment of the present disclosure.
FIG. 9B shows another modified example of the display unit included in the electronic mirror device according to the exemplary embodiment of the present disclosure.

### DESCRIPTION OF EMBODIMENTS

Prior to describing an exemplary embodiment of the present disclosure, problems with conventional electronic mirror devices will now be briefly described as follows. When the driver sees an image on the image display unit through the semi-reflective mirror, the reflection of the image on the image display unit appears on the image-display-unit side of the mirror. The reflection does not affect the visibility when the driver sees, from the front, the image displayed on the image display unit through the mirror.

The image display unit, however, is installed in a position to which a rearview mirror is attached in the automobile interior. As a result, the driver sees the image displayed on the image display unit through the semi-reflective mirror not from the front but at an angle. In that case, the reflection of the image appearing on the image-display-unit side of the mirror causes image overlapping, reducing the visibility of the electronic mirror device.

In such an electronic mirror device with which the driver sees an image on the image display unit through the semi-reflective mirror, the luminance of the image is decreased by passing through the semi-reflective mirror, and hence, the visibility of the image display unit is decreased.

Hereinafter, an electronic mirror device according to an exemplary embodiment of the present disclosure will be described with reference to drawings, where the electronic mirror device is mounted to an automobile as an example of a vehicle.

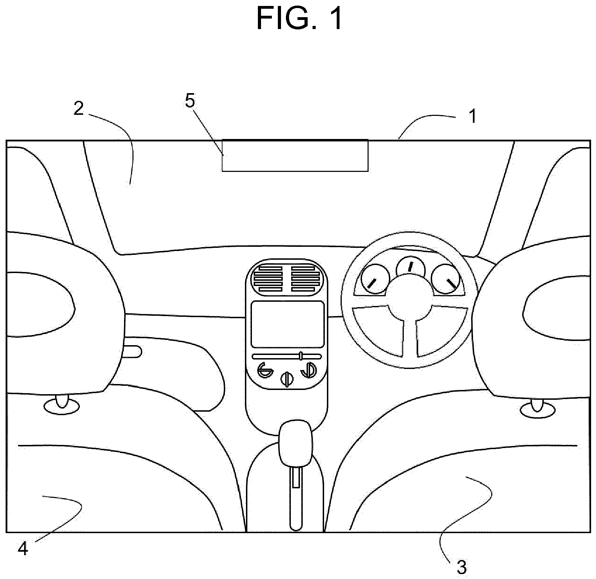

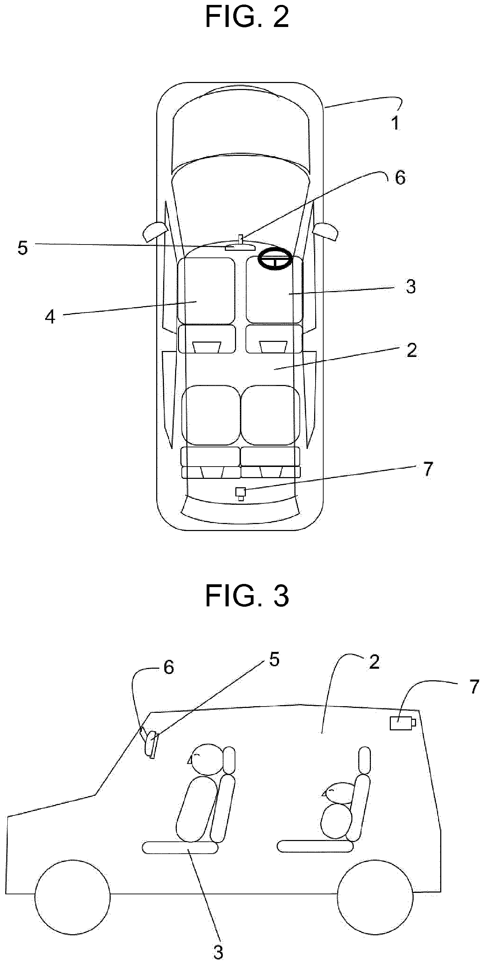

As shown in FIGS. 1 to 3, display device 5 as a component of the electronic mirror device is installed in the rearview mirror position in such a manner as to be adjustable relative to installation portion 6. The rearview mirror position is between driver's seat 3 and passenger's seat 4 in the front area of automobile interior 2 of automobile 1.

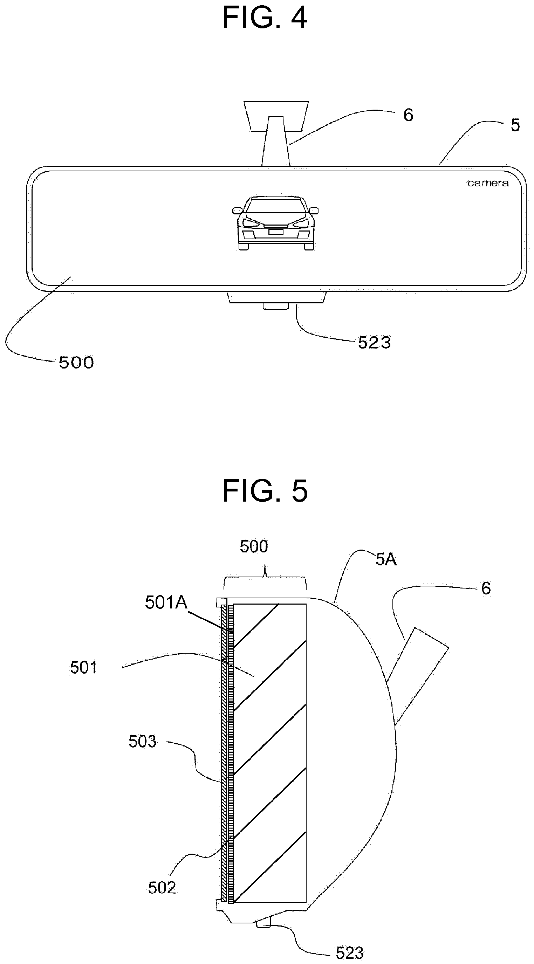

As shown in FIG. 4, display device 5 can switch the image to appear on display unit 500 between an image provided by the liquid crystal display as the image display unit and an image provided by the semi-reflective mirror as a mirror. This switching is performed with an operation to operation receiver 523.

As shown in FIG. 5, display device 5 includes body case 5A, liquid crystal display 501, quarter-wave retarder (hereinafter, retarder) 502, film 503 with a cholesteric liquid crystal layer, and operation receiver 523. Body case 5A has an opening on its driver's-seat side, and accommodates liquid crystal display 501 in such a manner that the display surface of display 501 is disposed on the driver's-seat side. Retarder 502 is disposed on the driver's-seat side of display 501, and film 503 is disposed on the driver's-seat side of retarder 502. Operation receiver 523 is provided for turning on and off the liquid crystal display.

Retarder 502 on the driver's-seat side of display 501 is disposed to circularly polarize a liquid crystal image emitted from the liquid crystal display. Film 503 disposed on the driver's-seat side of retarder 502 is configured to transmit an image circularly polarized by retarder 502. In the present embodiment, a film with the cholesteric liquid crystal layer is used. Alternatively, a planar member with a cholesteric liquid crystal layer can be used.

Thus, the electronic mirror device of the present exemplary embodiment includes liquid crystal display 501 having display surface 501A, retarder 502, and the cholesteric liquid crystal layer. Retarder 502 is disposed opposite display surface 501A of liquid crystal display 501, and circularly polarizes an image emitted from liquid crystal display 501. The cholesteric liquid crystal layer is disposed on the opposite side of retarder 502 from display 501. The image circularly polarized by retarder 502 passes through the cholesteric liquid crystal layer.

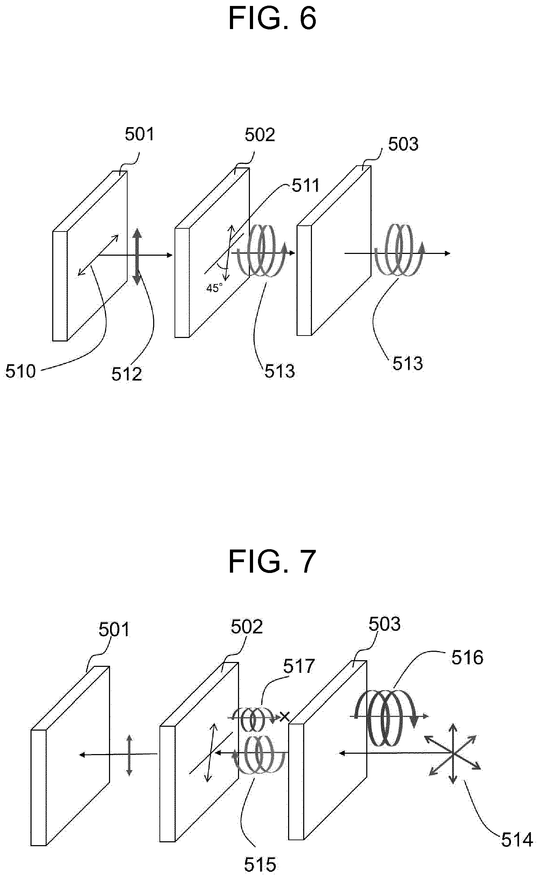

More specifically, liquid crystal display 501, retarder 502, and film 503 with the cholesteric liquid crystal layer are disposed as shown in FIG. 6 where the right side is the driver's-seat side.

Retarder 502 has slow-phase axis 511 tilted 45 degrees leftward from absorption axis 510 of the display surface of liquid crystal display 501. In other words, when seen from the driver's-seat side, slow-phase axis 511 is tilted 45 degrees counterclockwise from absorption axis 510.

In the above configuration, when the electronic mirror device functions as the liquid crystal display, liquid crystal display 501 emits linearly polarized liquid crystal image 512. Image 512 is then converted into liquid crystal image 513 right-circularly polarized by retarder 502 disposed as described above.

The cholesteric liquid crystal layer has the property of separating unpolarized light into right-circularly polarized light and left-circularly polarized light and then transmitting one of them and reflecting the other. In FIG. 6, cholesteric liquid crystal layer film 503 with the cholesteric liquid crystal layer is configured to transmit the right-circularly polarized light.

As a result, liquid crystal image 513 right-circularly polarized by retarder 502 passes through film 503, so that the viewer of display device 5 can see right-circularly polarized image 513 that has passed through film 503.

In film 503, which is configured to transmit right-circularly polarized light, almost the entirety of the right-circularly polarized image is transmitted instead of being reflected.

Therefore, film 503 does not decrease the luminance of a liquid crystal image and does not cause image overlapping, which are caused by the semi-reflective mirror used in the conventional electronic mirror device.

The following is a description of how display unit 500 reacts with outside light. As shown in FIG. 7, unpolarized outside light 514 incident on film 503 is separated into right-circularly polarized light and left-circularly polarized light by film 503. Right-circularly polarized light 515 alone passes through film 503 after the separation and is reflected in part by retarder 502 and linearly polarized in part and absorbed into liquid crystal display 501.

Left-circularly polarized light 516 is reflected by film 503 after the separation and allows film 503 to function as a mirror. As a result, a left-circularly polarized mirror image appears on film 503. In that case, the reflection of right-circularly polarized light 515 on retarder 502 becomes left-circularly polarized light 517 and is reflected by film 503 which transmits right-circularly polarized light alone. As a result, light 517 does not reach the driver, so that no image overlapping is caused by the image reflected on the quarter-wave retarder.

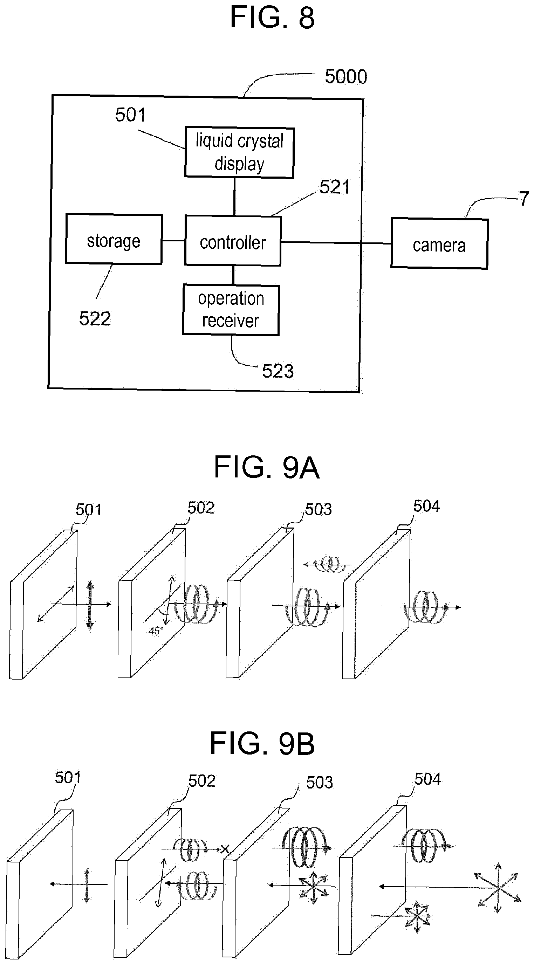

Liquid crystal display 501 displays an image behind automobile 1 captured by camera 7 mounted to automobile 1. As shown in FIG. 8, camera 7 and liquid crystal display 501 are connected to controller 521, which is connected to storage 522 storing an operational program, and to operation receiver 523 for operating a power switch (not shown) and other components.

In FIG. 8, liquid crystal display 501, controller 521, storage 522, and operation receiver 523 are components of electronic mirror device 5000 of the present exemplary embodiment.

As described above, electronic mirror device 5000 of the present exemplary embodiment includes retarder 502 for circularly polarizing an liquid crystal image emitted from liquid crystal display 501, and film 503 with the cholesteric liquid crystal layer for transmitting the image circularly polarized by retarder 502. As a result, device 5000 can prevent a decrease in visibility, which is caused by image overlapping and a decrease in the luminance of an image when the conventional semi-reflective mirror is used.

Circularly polarizing a linearly polarized liquid crystal image can eliminate the luminance change of an image caused by a change in the angle at which the driver sees the liquid crystal display when wearing polarized sunglasses.

In the present exemplary embodiment, the quarter-wave retarder is disposed in such a manner as to right-circularly polarize a liquid crystal image. It is obvious, however, that a similar effect can be obtained by disposing the retarder in such a manner as to left-circularly polarize the image, and by disposing the film with the cholesteric liquid crystal layer for transmitting the left-circularly polarized light on the driver side of the retarder.

The film with the cholesteric liquid crystal layer has a constant reflectivity of, for example, 50% in the present exemplary embodiment. In order to control the reflectivity, it is possible to provide filter 504 for controlling the amount of light reflection on the driver's-seat side of film 503 as shown in FIGS. 9A and 9B. Filter 504 can be, for example, a semi-reflective mirror with high transmittance or a neutral density (ND) filter. In other words, filter 504 is disposed on the opposite side of film 503 from retarder 502.

Alternatively, filter 504 may be disposed between film 503-and the quarter-wave retarder. Meanwhile, display device 5 is installed in the position to which the rearview mirror is attached in the automobile interior in the present exemplary embodiment, but may alternatively be installed in a position to which a side mirror is attached outside the automobile interior. Thus, display device 5 can be installed in any position to which a mirror is attached for allowing the driver to check the view behind the vehicle.

As described above, the electronic mirror device of the present exemplary embodiment provides images with high luminance because there is no decrease in the luminance of images unlike in the electronic mirror device including the conventional semi-reflective mirror. Moreover, the electronic mirror device of the present exemplary embodiment can provide both an image with high luminance and a high reflectivity for outside light as a mirror, for the following reasons. Assuming that the semi-reflective mirror has a reflectivity X (0 < X < 1) for outside light in a conventional electronic mirror device including the semi-reflective mirror, the transmittance is 1 - X. Assuming that the image emitted from the image display unit has a luminance Y [cd/m²], the image passing through the semi-reflective mirror and reaching the driver has a luminance Z, which is up to Y × (1 - X) [cd/m²] when the loss in each unit is not taken into consideration. As the semi-reflective mirror has a higher reflectivity for outside light, the mirror has a lower transmittance. Therefore, in the conventional electronic mirror device including the semi-reflective mirror, increasing the reflectivity for outside light and increasing the luminance of the image reaching the driver are in a trade-off relationship.

On the other hand, the electronic mirror device of the present exemplary embodiment makes use of the property of film 503 which reflects one of the right-circularly polarized light and the left-circularly polarized light, and transmits the other. As a result, there is no trade-off relationship as mentioned above. Therefore, assuming that film 503 has a reflectivity X for outside light, the luminance Z of the image passing through film 503 and reaching the driver can exceed Y × (1 - X) [cd/m²]. Thus, if the luminance of the image reaching the driver is equal, the electronic mirror device of the present exemplary embodiment requires lower display luminance than the conventional one including the semi-reflective mirror.

For example, assume that the luminance A is 150 [cd/m²] in the daytime environment in the automobile interior. In that case, the display installed in the automobile interior needs to have a contrast (the ratio of the image to the reflection) of at least 4:1. If the mirror has a reflectivity of 40%, the image needs to have a luminance Z of 150 × 0.4 × 4 = 240 [cd/m²] or higher. In order for the image to have a luminance of 240 [cd/m²] or higher in the conventional structure including the semi-reflective mirror, the display luminance Y needs to be at least 400 [cd/m²], based on the relation of Z = Y × (1 - 0.4). Meanwhile, in order for the present exemplary embodiment to obtain an image with the same luminance as in the case of the conventional structure including the semi-reflective mirror, the display luminance Y can be as low as 342 [cd/m²], based on the relation Z = Y × (1 - 0.3) even when the polarization and interface reflection losses are estimated to be 30%.

As described above, in the electronic mirror device of the present exemplary embodiment, the film with the cholesteric liquid crystal layer has a constant reflectivity. In other words, the reflectivity of film 503 for outside light when display 501 is ON is the same as when display 501 is OFF. Therefore, when display 501 is ON, film 503 is kept in the state of reflecting one of right-circularly polarized light and left-circularly polarized light and transmitting the other. The advantages of this will be described as follows.

For example, assume that the driver is monitoring the rear view through the right-circularly polarized liquid crystal image emitted from display unit 500. In that case, film 503 is transmitting right-circularly polarized liquid crystal image, and at the same time, is keeping an appropriate reflectivity for left-circularly polarized outside light. The term "appropriate reflectivity" used here means that film 503 itself has a reflectivity high enough to function as a mirror to check behind automobile 1. The reflectivity is preferably not less than 0.4 (40%). With this reflectivity, even if display 501 is suddenly turned off due to a failure, display unit 500 is automatically and instantaneously switched to function as the mirror for reflecting left-circularly polarized outside light. This ensures the driver's rearward visibility. Thus, in the electronic mirror device of the present exemplary embodiment, even when the liquid crystal display is ON, the film with the cholesteric liquid crystal layer is kept in the state of reflecting one of right-circularly polarized light and left-circularly polarized light and transmitting the other, and has the same reflectivity as when the display is OFF. As a result, the electronic mirror device is fail-safe against the failure of the liquid crystal display.

### INDUSTRIAL APPLICABILITY

The electronic mirror device according to the exemplary embodiment of the present disclosure is useful as a vehicle-mounted monitoring device.

### REFERENCE MARKS IN THE DRAWINGS

- 1: automobile
- 2: automobile interior
- 3: driver's seat
- 4: front passenger's seat
- 5: display device
- 5A: body case
- 6: installation portion
- 7: camera
- 500: display unit
- 501: liquid crystal display
- 501A: display surface
- 502: quarter-wave retarder (retarder)
- 503: film with a cholesteric liquid crystal layer
- 504: filter for controlling the amount of light reflection
- 510: absorption axis
- 511: slow-phase axis
- 512, 513: liquid crystal image
- 514: outside light
- 515: right-circularly polarized light
- 516, 517: left-circularly polarized light
- 521: controller
- 522: storage
- 523: operation receiver
- 5000: electronic mirror device

## Claims

1. An electronic mirror device for displaying an image captured by a camera mounted to a vehicle, the electronic mirror device comprising:
a liquid crystal display having a display surface;
a retarder disposed opposite the display surface of the liquid crystal display, the retarder circularly polarizing a liquid crystal image emitted from the liquid crystal display; and
a cholesteric liquid crystal layer disposed on an opposite side of the retarder from the liquid crystal display, the cholesteric liquid crystal layer transmitting the liquid crystal image circularly polarized by the retarder.

2. The electronic mirror device according to claim 1, wherein
the retarder is a quarter-wave retarder having a slow-phase axis tilted 45 degrees from an absorption axis of the liquid crystal display, and
the cholesteric liquid crystal layer is configured to transmit the liquid crystal image circularly polarized in a same direction as being circularly polarized by the retarder.

3. The electronic mirror device according to claim 1 or 2, further comprising a filter that controls an amount of light reflection, the filter being disposed on an opposite side of the cholesteric liquid crystal layer from the retarder.

4. The electronic mirror device according to any one of claims 1 to 3, wherein when the liquid crystal display is ON, the cholesteric liquid crystal layer is kept in a state of transmitting one of right-circularly polarized light and left-circularly polarized outside light, and reflecting the other one of the right-circularly polarized light and the left-circularly polarized outside light.

5. The electronic mirror device according to claim 4, wherein when the liquid crystal display is OFF, the cholesteric liquid crystal layer has a same reflectivity for outside light as when the liquid crystal display is ON.

6. The electronic mirror device according to claim 4 or 5, wherein the cholesteric liquid crystal layer has a reflectivity of 0.4 or greater for outside light.

7. The electronic mirror device according to any one of claims 1 to 6, wherein when the cholesteric liquid crystal layer has a reflectivity X where 0 < X < 1 for outside light, and the liquid crystal image emitted from the liquid crystal display has a luminance Y, the liquid crystal image passed through the cholesteric liquid crystal layer has a luminance Z exceeding Y × (1 - X).
